(19) Europäisches Patentamt
European Patent Office
Office européen des brevets

(11) **EP 2 072 194 B1**

(12) **EUROPÄISCHE PATENTSCHRIFT**

(45) Veröffentlichungstag und Bekanntmachung des Hinweises auf die Patenterteilung:
**08.05.2019   Patentblatt 2019/19**

(51) Int Cl.:
**B25J 9/16** *(2006.01)*

(21) Anmeldenummer: **08021107.1**

(22) Anmeldetag: **04.12.2008**

(54) **Verfahren und Vorrichtung zur modellbasierten Regelung eines Manipulators**

Method and device for model-based controlling of a manipulator

Procédé et dispositif de réglage à base de modèles d'un manipulateur

(84) Benannte Vertragsstaaten:
**DE ES FR IT**

(30) Priorität: **17.12.2007   DE 102007060682**

(43) Veröffentlichungstag der Anmeldung:
**24.06.2009   Patentblatt 2009/26**

(73) Patentinhaber: **KUKA Deutschland GmbH**
**86165 Augsburg (DE)**

(72) Erfinder: **Schreiber, Günter, Dr.**
**86216 Friedberg (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A1- 0 404 962     EP-A2- 0 605 050**
**EP-A2- 1 445 075     DE-A1- 3 319 983**
**US-A- 4 214 301**

• **Q ET AL: "Internal model structure in the control of robot manipulators", MECHATRONICS, PERGAMON PRESS, OXFORD, GB, Bd. 6, Nr. 5, 1. August 1996 (1996-08-01), Seiten 571-590, XP004047530, ISSN: 0957-4158, DOI: DOI:10.1016/0957-4158(95)00089-5**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur modellbasierten Regelung eines Manipulators sowie eine Vorrichtung zur Durchführung eines solchen Verfahrens.

Allgemein wird die Dynamik eines Manipulators durch seine Bewegungsgleichungen

$$M \frac{d^2 q}{dt^2} + h\left(q, \frac{dq}{dt}, t\right) = J^T \mathrm{T} \qquad (1)$$

beschrieben, wobei M die Massenmatrix, q die Minimalkoordinaten, beispielsweise seine Gelenkwinkel, $d^i/dt^i$ die i-te Ableitung nach der Zeit t, h den Vektor der generalisierten eingeprägten Kräfte, insbesondere gyroskopischer, Gravitations- und Reibungskräfte, und T den Vektor der Steuergrößen, beispielsweise der Drehmomente $\tau$ der Aktuatoren bezeichnet, der durch die transponierte Jacobimatrix $J^T$ in den Raum der Minimalkoordinaten q transformiert wird.

Manipulatoren, beispielsweise Industrie- oder Serviceroboter, werden bisher meist positionsgeregelt. Hierzu werden Aktuatoren des Manipulators, beispielsweise Elektromotoren eines Industrieroboters, Soll-Positionen $q_{soll}(t)$ vorgegeben, um gewünschte Posen des Manipulators anzufahren oder zu halten. Regler, beispielsweise Proportional-Integral-Differential-Regler, denen die von Sensoren erfassten Ist-Positionen $q_{mess}$ der Aktuatoren, beispielsweise Winkellagen der Läufer von Elektromotoren, zugeführt werden, steuern die Aktuatoren dann entsprechend der Regeldifferenz zwischen Soll- und Ist-Position an. Die Bewegungsgleichungen lauten dann beispielsweise für einen PID-geregelten Manipulator:

$$\frac{d^2 q}{dt^2} = M^{-1} \left\{ J^T \left[ P(q_{soll} - q_{mess}) + I \int_t (q_{soll} - q_{mess}) + D\left(\frac{dq_{soll}}{dt} - \frac{dq_{mess}}{dt}\right) \right] - h\left(q, \frac{dq}{dt}, t\right) \right\} \qquad (2)$$

Demgegenüber weist eine modellbasierte Regelung Vorteile auf. Bei dieser werden anhand eines Modells des Manipulators Soll-Kräfte in dessen Gelenken bestimmt, die eine gewünschte Dynamik des Manipulators realisieren. Kräfte bezeichnen vorliegend verallgemeinernd auch Drehmomente, beispielsweise ein von einem Aktuator in Form eines Drehmotors auf ein Drehgelenk ausgeübtes Drehmoment. Die Aktuatoren prägen dann diese Soll-Kräfte auf, indem die Soll-Kräfte durch eine Kraft- bzw. Drehmomentregelung angefahren werden, i.e. unter Abgleich mit tatsächlich auftretenden Ist-Kräften bzw. -Drehmomenten und entsprechender Ansteuerung der Aktuatoren entsprechend der Regeldifferenz zwischen Soll- und Ist-Kraft bzw. - Drehmoment. Dabei ist der Abgleich zwischen Soll- und Ist-Kräften bevorzugt, jedoch nicht zwingend notwendig. Es ist gleichermaßen möglich, ohne Rückkopplung beispielsweise entsprechende Spannungen an als Aktuatoren wirkende Elektromotoren oder entsprechende Hydraulikdrücke an als Aktuatoren wirkende Hydraulikkolben anzulegen, die dann im Wesentlichen die anhand des Modells bestimmten Soll-Kräfte liefern. Der Begriff der modellbasierten Regelung umfasst daher vorliegend verallgemeinernd auch eine reine modellbasierte Steuerung.

Auf Basis eines mechanischen Modells des Manipulators in der Form

$$M_{Modell} \frac{d^2 q_{Modell}}{dt^2} + h_{Modell}\left(q_{Modell}, \frac{dq_{Modell}}{dt}, t\right) = J^T_{Modell} \mathrm{T}_{Modell} \qquad (3)$$

können nun diejenigen Steuergrößen

$$\mathrm{T}_{soll} = \left(J^T_{Modell}\right)^{-1} \left[ M_{Modell} \frac{d^2 q_{soll}}{dt^2} + h_{Modell}\left(q_{soll}, \frac{dq_{soll}}{dt}, t\right) \right] \qquad (4)$$

bestimmt werden, die theoretisch eine gewünschte Dynamik $q_{soll}(t)$ des Manipulators realisieren, da aus (1), (4) folgt:

$$\frac{d^2q}{dt^2} = M^{-1}\left[J^T\mathrm{T} - h\left(q,\frac{dq}{dt},t\right)\right]$$

$$= M^{-1}\left\{J^T\left(J^T_{Modell}\right)^{-1}\left[M_{Modell}\frac{d^2q_{soll}}{dt^2} + h_{Modell}\left(q_{soll},\frac{dq_{soll}}{dt},t\right)\right] - h\left(q,\frac{dq}{dt},t\right)\right\}$$

$$= \left(M^{-1}J^T\left(J^T_{Modell}\right)^{-1}M_{Modell}\right)\frac{d^2q_{soll}}{dt^2} + M^{-1}\left[\left(J^T\left(J^T_{Modell}\right)^{-1}\right)h_{Modell}\left(q_{soll},\frac{dq_{soll}}{dt},t\right) - h\left(q,\frac{dq}{dt},t\right)\right]$$

(5).

Falls das mechanische Modell den realen Manipulator exakt abbildet, stellt sich exakt die gewünschte Dynamik ein:

$$\frac{d^2q}{dt^2} = \underbrace{\left(M^{-1}J^T\left(J^T_{Modell}\right)^{-1}M_{Modell}\right)}_{1}\frac{d^2q_{soll}}{dt^2} + M^{-1}\Bigg[\underbrace{\underbrace{\left(J^T\left(J^T_{Modell}\right)^{-1}\right)h_{Modell}\left(q_{soll},\frac{dq_{soll}}{dt},t\right) - h\left(q,\frac{dq}{dt},t\right)}_{1}}_{0}\Bigg]$$

$$= \frac{d^2q_{soll}}{dt^2}$$

(6).

Wie der Vergleich von (2) und (6) zeigt, kann im Vergleich zu einer Positionsregelung modellbasiert vorteilhaft eine beliebige Dynamik des Manipulators realisiert werden. Beispielsweise kann eine reine Gravitationskompensation durchgeführt werden, indem Drehmomente $G_{Modell}$ aufgeschaltet werden, die gerade die Gravitationskräfte kompensieren, die auf den Manipulator in der aktuellen Pose wirken:

$$M\frac{d^2q}{dt^2} + h\left(q,\frac{dq}{dt},t\right) = J^T G_{Modell}\left(q_{mess}\right) \qquad (7).$$

In diesem Fall reagiert der Manipulator quasi "schwerelos", i.e. antwortet auf eine beispielsweise manuell durch einen Bediener auf ihn ausgeübte Kraft mit einer Beschleunigung in die entsprechende Richtung. Insbesondere verharrt er ohne solchen äußeren Kräfte in seiner aktuellen Pose, so dass selbst schwere Manipulatoren manuell mit geringen Kräften in beliebige Posen bewegt werden können. Dies kann beispielsweise das Teachen von Posen eines Industrieroboters oder die Handhabung, insbesondere die Interaktion mit einem Serviceroboter erleichtern.

Wie sich insbesondere aus (6) ergibt, hängt die Performance einer modellbasierten Regelung von der Güte des mechanischen Modells ab. Unterscheidet sich beispielsweise die Massenmatrix $M_{Modell}$ des Modells aufgrund falscher Parameter für eine gegriffene Nutzlast, etwa einer falschen Masse, einer falschen Schwerpunktslage und/oder eines falschen Trägheitstensors, von der Massenmatrix des realen Manipulators, so ergäbe sich bereits bei im übrigen übereinstimmendem mechanischen Modell in (6):

$$\frac{d^2q}{dt^2} = \underbrace{\left(M^{-1}M_{Modell}\right)}_{\neq 1}\frac{d^2q_{soll}}{dt^2}$$

$$\neq \frac{d^2q_{soll}}{dt^2} \qquad (8).$$

Auch andere Modellierungsfehler, beispielweise eine abweichende Kinematik, die zu Abweichungen zwischen $q$ und $q_{Modell}$, $J$ und $J_{Modell}$ und/oder $h$ und $h_{Modell}$, führt, verschlechtern die Performance der modellbasierten Regelung.

Stimmt beispielsweise die Orientierung des im mechanischen Modell berücksichtigten Inertialsystems, insbesondere die Richtung des Gravitationsvektors, nicht mit der Realität überein, so ergibt sich bereits bei stillstehendem Manipulator mit Gravitationskompensation aus (7):

$$\frac{d^2q}{dt^2} = M^{-1}\left[J^T G_{Modell}(q_{mess}) - h(q,0,t)\right]$$
$$\neq 0 \qquad (9),$$

i.e. die auf den Manipulator wirkenden Gravitationskräfte werden nicht korrekt kompensiert und führen zu einer unerwünschten Beschleunigung.

Aus Gleichung (9) ist auch ersichtlich, dass selbst bei exakter Modellierung mit $G(q) = G_{Modell}(q)$ und einem stehenden, rein schwerkraftbeaufschlagten Manipulator die modellbasierte Regelung den Manipulator nicht, wie gewünscht, im Zustand der Ruhe oder gleichförmigen Bewegung verharren lässt, wenn die gemessenen Minimalkoordinaten $q_{mess}$ beispielsweise aufgrund einer fehlerhaften Justage von Drehwinkelsensoren, nicht mit den tatsächlichen Minimalkoordinaten q übereinstimmen:

$$\frac{d^2q}{dt^2} = M^{-1} J^T \underbrace{\left[G_{Modell}(q_{mess}) - G(q)\right]}_{\neq 0}$$
$$\neq 0 \qquad (10).$$

Ähnliches gilt beispielsweise auch bei einer fehlerbehafteten Beaufschlagung durch eine Drehmomentregelung. Da die den Manipulator beaufschlagenden Aktuatoren von der modellbasierten Drehmomentregelung in der Regel so angesteuert werden, dass die Differenz zwischen den modellbasiert vorgegebenen Soll-Drehmomenten und den von Drehmomentsensoren erfassten Ist-Drehmomenten minimal wird, beaufschlagt die Drehmomentregelung selbst bei einem exakten mechanischen Modell den Manipulator mit Drehmomenten, die nicht die gewünschte Dynamik realisieren, beispielsweise die Gravitation kompensieren, falls beispielsweise aufgrund einer fehlerhaften Justage von Drehmomentsensoren erfasste Ist-Drehmomente nicht mit den tatsächlichen Drehmomenten übereinstimmen.

Abweichungen zwischen den von einer modellbasierten Regelung auf einen Manipulator ausgeübten Kräften bzw. Drehmomenten und den Kräften bzw. Drehmomenten, die die gewünschte Dynamik des Manipulators tatsächlich bewirken, führen damit zu einer Verschlechterung der Regelperformance. Solche Abweichungen können beispielsweise, wie vorstehend ausgeführt, aus einer fehlerhaften Justage von Drehmomentsensoren, falschen Parametern einer gegriffener Nutzlast und/oder einem falschen Gravitationsvektor resultieren und zu unvorhergesehenen Bewegungen des Manipulators führen.

Aus der EP 0 404 962 A1 ist ein Verfahren zur Detektion einer Anomalie in einem PDgeregelten Servosystem bekannt. Hierzu wird durch Zeitintegration eine Position abgeschätzt, die Differenz mit einer kommandierten Position gebildet, und diese Differenz mit der Differenz der kommandierten und der tatsächlichen Position verglichen. Weichen diese Differenzen zu stark voneinander ab, weil beispielsweise der Servomotor infolge einer Kollision eines Roboterarms mit einem Hindernis der kommandierten Position nicht folgen kann, wird ein Alarm ausgegeben.

Aufgabe der vorliegenden Erfindung ist es daher, eine verbesserte modellbasierte Regelung eines Manipulators zur Verfügung zu stellen.

Diese Aufgabe wird durch die Merkmale des Anspruchs 1 gelöst. Anspruch 14 stellt eine Vorrichtung, Anspruch 15 bzw. 16 ein Computerprogramm bzw. ein Computerprogrammprodukt zur Durchführung eines Verfahrens nach Anspruch 1 unter Schutz. Die Unteransprüche betreffen vorteilhafte Weiterbildungen.

Nach einem erfindungsgemäßen Verfahren zur modellbasierten Regelung eines Manipulators, insbesondere eines Roboters wie beispielsweise eines Industrie- oder Serviceroboters, wird eine Soll-Kraft wenigstens eines Aktuators, bevorzugt mehrerer, besonders bevorzugt aller Aktuatoren des Manipulators auf Basis eines Modells des Manipulators bestimmt. Wie vorstehend ausgeführt, umfasst der Begriff "Kraft" auch ein gegensinniges Kräftepaar, i.e. ein Drehmoment. Werden mehrere Aktuatoren durch die modellbasierte Regelung angesteuert, kann eine Kraft im Sinne der vorliegenden Erfindung auch mehrere Komponenten umfassen. Steuert die modellbasierte Regelung beispielsweise alle Drehmotoren eines Manipulators an, so bilden die Drehmomente der einzelnen Drehmotoren zusammen einen Vektor, der eine "Kraft" im Sinne der vorliegenden Erfindung bilden kann.

Mit dieser Soll-Kraft wird der Manipulator bei einer modellbasierten Regelung durch die Aktuatoren beaufschlagt. Dies umfasst, wie vorstehend ausgeführt, sowohl die reine Beaufschlagung in Form einer Steuerung, beispielsweise das Anlegen entsprechender Spannungen an Antriebselektromotoren, als auch das Anfahren der Soll-Kraft durch eine Kraftregelung. Daher können die auf Basis des Modells bestimmte Soll-Kraft und die Kraft, mit der der Manipulator tatsächlich beaufschlagt wird, beispielsweise im Rahmen der Regeldifferenz einer Kraftregelung, voneinander abweichen.

Erfindungsgemäß wird nun das Modell, anhand dessen die Soll-Kraft bestimmt wird, wenigstens einmal validiert, bevor der Manipulator mit dieser Soll-Kraft beaufschlagt wird. Dadurch wird vorteilhaft verhindert, dass die modellbasierte Regelung den Manipulator mit Kräften beaufschlagt, die eine unerwünschte Dynamik des Manipulators bewirken, insbesondere zu unvorhergesehenen, fehlerhaften Bewegungen des Manipulators führen.

Hierzu wird wenigstens einmal eine vom Manipulator ausgeübte virtuelle Kraft auf Basis des Modells des Manipulators bestimmt. Außerdem wird eine vom Manipulator ausgeübte reale Kraft bestimmt, insbesondere durch Drehmomentsensoren oder dergleichen gemessen. Anschließend wird die Differenz zwischen der ausgeübten virtuellen und realen Kraft bestimmt und mit einem Maximalgrenzwert verglichen. Nur, falls die Differenz kleiner als der Maximalgrenzwert ist, wird das Modell, auf dem die Regelung basiert, akzeptiert und der Manipulator mit der auf Basis dieses Modells bestimmten Soll-Kraft beaufschlagt.

Dabei kann das Modell bevorzugt ein mechanisches Modell, insbesondere ein statisches oder dynamisches Modell des Manipulators sein. Ein dynamisches Modell kann beispielsweise die allgemeine Form gemäß Gleichung (3) aufweisen. Ein statisches Modell kann sich beispielsweise aus Gleichung (3) durch Streichung wenigstens aller geschwindigkeits- und beschleunigungsabhängiger Terme ergeben. Insbesondere kann ein statisches Modell, bevorzugt ausschließlich, auf den Manipulator wirkende Gravitationskräfte enthalten.

Neben solchen mechanischen Modellen sind jedoch auch andere Modelle, beispielsweise neuronale Netze, Messwert-Tabellen, die beispielsweise interpoliert werden, oder dergleichen möglich.

Auf Basis des Modells kann nun einerseits bei bekannter gewünschter Dynamik, beispielsweise vorgegebener Soll-Pose, -Geschwindigkeit und/oder -Beschleunigung, eine Soll-Kraft gemäß Gleichung (4) bestimmt werden. Auf diese Weise können beispielsweise die Drehmomente berechnet werden, die die Drehmotoren eines Manipulators aufbringen müssen, um dessen Gewichtskräfte ganz oder teilweise zu kompensieren. Auf der anderen Seite kann umgekehrt auf Basis desselben Modells, beispielsweise gemäß Gleichung (3), auch virtuell die Kraft bestimmt werden, die der Manipulator in einer bestimmten Pose bzw. bei einer bestimmten Bewegung auf einen oder mehrere Sensoren ausübt, die beispielsweise an den Aktuatoren oder an Bremsen des Manipulators angeordnet sind und zusammen eine Sensoranordnung bilden. Als auf einen Sensor ausgeübte Kraft wird dabei insbesondere eine Kraft verstanden, die von dem Sensor erfassbar ist, beispielsweise das auf eine Welle wirkende Torsionsmoment, das durch Dehnmessstreifen an der Welle erfassbar ist.

Wird nun die solcherart auf Basis des Modells bestimmte virtuelle Kraft mit einer von der Sensoranordnung erfassten realen Kraft verglichen, so kann aus der Differenz zwischen virtueller und realer Kraft die Güte des Modells beurteilt, insbesondere das Modell auf Plausibilität geprüft werden. Ist eine Differenz zwischen der erfassten realen und der aus dem Modell bestimmten virtuellen Kraft kleiner als ein vorgegebener Maximalgrenzwert, kann davon ausgegangen werden, dass das Modell hinreichend genau mit der Realität übereinstimmt, so dass es der modellbasierten Regelung zugrundegelegt werden kann.

Die Differenz kann dabei bevorzugt als Betrag oder Norm gebildet werden. Umfasst die virtuelle und reale Kraft jeweils mehrere Komponenten, etwa die einzelnen Drehmomente in den Bewegungsachsen des Manipulators, so können zunächst komponentenweise Einzeldifferenzen gebildet werden, die zusammen einen Differenzvektor bilden. Dieser kann nun auf verschiedene Arten mit dem Maximalgrenzwert verglichen werden. Beispielsweise kann der Betrag des Differenzvektors, also die Wurzel aus der Summe der Quadrate der Einzeldifferenzen, mit einem skalaren Maximalgrenzwert verglichen werden. Alternativ kann auch eine Maximums(betrags)norm des Differenzvektors gebildet werden, die den Wert der größten Einzeldifferenz, vorzugsweise betragsmäßig, darstellt und ebenfalls mit einem skalaren Maximalgrenzwert verglichen werden kann. Gleichermaßen kann auch der Maximalgrenzwert einen Vektor bilden, so dass die Einzeldifferenzen komponentenweise mit Maximalwerten verglichen werden, wobei die Differenz in diesem Fall bevorzugt nur dann kleiner als der Maximalgrenzwert ist, wenn jede Einzeldifferenz kleiner als die ihr komponentenweise zugeordnete Maximalwert ist.

Das Modell kann unterschiedliche Umgebungsbedingungen und Zustände des Manipulators unterschiedlich gut approximieren. Beispielsweise kann ein statisches Modell gyroskopische und Trägheitskräfte des Manipulators in der Regel allenfalls näherungsweise mittels sogenannter Dynamikfaktoren approximieren. Bewegt sich der Manipulator, weicht daher die auf Basis eines statischen Modells bestimmte virtuelle Kraft in der Regel stärker von der erfassten realen Kraft ab als bei stehendem Roboter. Wirken auf den Roboter externe, im Modell nicht berücksichtigte Lasten, etwa eine geänderte Nutzlast und/oder eine Berührung durch eine Bedienperson, so weicht die auf Basis des Modells bestimmte virtuelle Kraft ebenfalls deutlicher von der erfassten realen Kraft ab als bei einem Roboter, auf den keine solchen Kräfte wirken.

Dies kann durch die Anpassung des Maximalgrenzwertes an unterschiedliche Manipulatorzustände und/oder -umgebungsbedingungen berücksichtigt werden.

In einer bevorzugten Ausführung wird die Differenz zwischen ausgeübter virtueller und realer Kraft bestimmt und mit einem Maximalgrenzwert verglichen, während der Manipulator sich nicht bewegt und keine im Modell nicht berücksichtigten bzw. unbekannten externen Kräfte auf ihn wirken. Dies kann bevorzugt über einen vorbestimmten Zeitraum erfolgen, beispielsweise bei Inbetriebnahme des Manipulators oder nach Änderung des zugrundeliegenden Modells. Ein solcher Zeitraum kann beispielsweise zwischen 1s und 20s, bevorzugt zwischen 1s und 10s, und besonders bevorzugt zwischen 1s und 5s betragen, um einerseits eine ausreichende Validierung des Modells zu gewährleisten und andererseits den Manipulator nicht unnötig lange außer Betreib zu setzen.

Solange der Manipulator sich nicht bewegt, wirken auf ihn keine Trägheitskräfte, so dass er durch ein rein statisches Modell gut approximierbar ist. Es wirken auch keine Gleitreibungskräfte, so dass auch ein dynamisches Modell den Manipulator in der Regel im Stillstand besser approximiert. Wirken zudem keine unbekannten externen Kräfte auf ihn, die im Modell nicht berücksichtigt sind, ist beispielsweise gewährleistet, dass niemand den Manipulator berührt und/oder dass der Manipulator keine oder nur eine wohlbekannte Nutzlast greift, sollte das Modell, auf dem die Regelung basiert, den Manipulator besonders gut approximieren. Daher wird bevorzugt als der Maximalgrenzwert ein erster Grenzwert gewählt, der relativ klein sein kann.

Vorzugsweise kann eine solche erste Validierung des Modells durch Vergleich mit einem kleinen ersten Grenzwert bei Inbetriebnahme, nach der Änderung von Umgebungsbedingungen (beispielsweise einer Änderung der gegriffenen Nutzlast) oder dergleichen durchgeführt werden. Insbesondere in solchen ausgezeichneten Zuständen kann auch zuverlässig sichergestellt werden, dass keine unbekannten externen Kräfte auf den Manipulator wirken, dass also beispielsweise niemand den Manipulator berührt und der Manipulator keine oder nur eine richtig parametrierte Nutzlast greift.

In einer bevorzugten Ausführung wird zusätzlich oder alternativ zu der vorstehend erläuterten ersten Validierung die Differenz zwischen ausgeübter virtueller und realer Kraft bestimmt und mit einem Maximalgrenzwert verglichen, während der Manipulator sich nicht bewegt, wobei unbekannten, im Modell nicht berücksichtigte externen Kräfte auf ihn wirken dürfen, die vorzugsweise betragsmäßig beschränkt sind.

Ein Modell, auf dem die Regelung des Manipulators basiert, soll vorzugsweise gegenüber beschränkten externen Störungen, etwa durch eine manuelle Berührung des Manipulators, robust sein und hierzu das Verhalten des Manipulators auch unter solchen externen Störungen hinreichend genau beschreiben. Zudem sind auch Validierungen denkbar, bei denen unbekannte externe Kräfte, beispielsweise solche Berührungen, nicht ausgeschlossen werden können, wobei aufgrund fehlender dynamischer Faktoren des stillstehenden Manipulators das Modell trotzdem noch relativ präzise sei sollte. Daher ist bevorzugt vorgesehen, die Differenz zwischen ausgeübter virtueller und realer Kraft mit einem zweiten Maximalwert zu vergleichen, der - aufgrund der zugelassenen externen Störungen und der damit in der Regel verbundenen größeren Differenz - bevorzugt größer als ein erster Grenzwert ist, mit dem die Differenz bei der ersten Validierung verglichen wird, bei der keine unbekannten externen Kräfte auf den stillstehenden Manipulator wirken.

Werden eine solche zweite Validierung und eine vorstehend beschriebene erste Validierung miteinander kombiniert, so wird der Manipulator bevorzugt mit der auf Basis des Modells des Manipulators bestimmten Soll-Kraft nur beaufschlagt, falls die Vergleiche ergeben, dass die Differenz bei stillstehendem Manipulator ohne unbekannte externe Kräfte kleiner als der erste Grenzwert und die Differenz bei stillstehendem Manipulator mit unbekannten externen Kräfte kleiner als der zweite Grenzwert ist. Hierzu kann beispielsweise zunächst die erste Validierung für einen vorbestimmten Zeitraum durchgeführt werden, und dann, wenn diese erste Validierung erfolgreich abgeschlossen wurde, i.e. der Vergleich ergeben hat, dass die Differenz bei stillstehendem Manipulator ohne unbekannte externe Kräfte kleiner als der erste Grenzwert ist, eine manuelle Berührung des Manipulators durch einen Bediener zugelassen und die zweite Validierung durchgeführt werden. Nur, wenn auch diese zweite Validierung erfolgreich abgeschlossen wurde, i.e. der Vergleich ergeben hat, dass die Differenz bei stillstehendem Manipulator mit unbekannten externen Kräfte kleiner als der zweite, größere Grenzwert ist, werden mechanische oder softwaremäßig implementierte Bremsen des Manipulators gelöst und der Manipulator modellbasiert geregelt.

Bevorzugt wird die erste und/oder zweite Validierung bei geschlossenen mechanischen oder softwaremäßig implementierten Bremsen des Manipulators durchgeführt, die eine Bewegung des Manipulators im Wesentlichen verhindern. Bei geschlossenen mechanischen Bremsen kann als reale Kraft beispielsweise die vom Manipulator auf eine zwischen Manipulatorglied und Aktuator angeordnete Bremse ausgeübte Kraft erfasst werden. Gleichermaßen können, beispielsweise durch steife Proportional-Integral-Regler, die softwaremäßig eine Fesselung der Manipulatorglieder durch steife Federn realisieren, auch softwaremäßig Bremsen realisiert sein. In diesem Fall kann die vom Manipulator auf einen Aktuator ausgeübte reale Kraft beispielsweise aus dem vom diesem Aktuator zur softwaremäßig implementierten Fesselung des Manipulators aufgenommene Leistung, beispielsweise den Motorstrom eines PI-geregelten Elektromotors, bestimmt werden.

Während des Betriebs, i.e. einer Bewegung des Manipulators, können die Abweichungen zwischen ausgeübter virtueller und realer Kraft aufgrund nicht modellierter dynamischer Effekte, beispielsweise Reibung, Massenträgheiten, Dreckeffekten oder dergleichen, größer sein. Daher wird in einer bevorzugten Ausführung zusätzlich oder alternativ zu der vorstehend erläuterten ersten und/oder zweiten Validierung die Differenz zwischen ausgeübter virtueller und realer Kraft bestimmt und mit einem Maximalgrenzwert verglichen, während der Manipulator sich bewegt. In diesem Fall wird der Manipulator bevorzugt mit der auf Basis des Modells des Manipulators bestimmten Soll-Kraft nur beaufschlagt, falls dieser Vergleich ergibt, dass die Differenz bei sich bewegendem Manipulator kleiner als ein dritter Grenzwert ist, der insbesondere größer als der erste und/oder zweite Grenzwert sein kann. Eine solche dritte Validierung kann bevorzugt ein- oder mehrfach, insbesondere periodisch oder kontinuierlich während des Betriebs des Manipulators durchgeführt werden, wobei in einer bevorzugten Ausführung bei Stillstandzeiten während des Betriebs in die zweite Validierung zurückgekehrt und bei erneuter Bewegung des Manipulators wieder die dritte Validierung durchgeführt werden kann.

Unbekannte externe Kräfte, insbesondere durch eine manuelle Berührung des Manipulators oder einen, insbesondere stoßartigen, Kontakt mit der Umgebung wirken in der Regel nicht über einen längeren Zeitraum, sondern führen nur zu relativ kurzzeitigen Spitzen in der vom Manipulator ausgeübten realen Kraft. In einer bevorzugten Ausführung der vorliegenden Erfindung ergibt der Vergleich daher, dass die Differenz kleiner als der Maximalgrenzwert ist, wenn die Differenz höchstens für einen vorgegebenen Akzeptanzzeitraum größer als der Maximalgrenzwert ist. Zusätzlich oder alternativ kann auch eine Eingabemöglichkeit vorgesehen sein, mit der ein Benutzer während einer Validierung Abweichungen zwischen ausgeübter realer und virtueller Kraft zulassen, i.e. ein Beaufschlagen des Manipulators mit der auf Basis des Modells des Manipulators bestimmten Soll-Kraft ermöglichen kann, falls der Vergleich ergibt, dass die Differenz nicht kleiner als der Maximalgrenzwert ist.

Ändern sich Randbedingungen, die bei der Modellierung zugrundegelegt wurden, greift beispielsweise ein Manipulator eine Last, legt eine Last ab, oder greift eine Last anders, so kann dies zu einem anderen Modell des Manipulators führen. Auch andere Umgebungsbedingungen können sich ändern, beispielsweise, wenn der Manipulator in eine Flüssigkeit eintaucht, so dass sich sowohl geschwindigkeitsabhängige Bewegungswiderstände als auch, bedingt durch Auftrieb, Gewichtskräfte ändern. In einer bevorzugten Ausführung ist hierzu ein Wechsel des Modells, auf dem die Regelung basiert, vorgesehen. Die Soll-Kraft und die vom Manipulator ausgeübte virtuelle Kraft werden dazu bevorzugt beide auf Basis eines erste oder eines zweiten, hiervon verschiedenen Modells des Manipulators bestimmt. Hierzu kann es ausreichen, jedes Modell nur einmal zu validieren, etwa während einer Inbetriebnahme eine erste Validierung eines ersten Modells des Manipulators ohne gegriffene Last und eine weitere erste Validierung eines zweiten Modells des Manipulators mit gegriffener Last durchzuführen, und - beispielsweise während eines Betriebs des Manipulators, während dessen er die Last aufnimmt und wieder ablegt - zunächst vom ersten zum zweiten validierten Modell und wieder zurück zum ersten validierten Modell zu wechseln. Zum Wechsel zwischen Modellen kann es ausreichen, jedes Modell vorab einmal zu validieren, beispielsweise die Differenz zwischen ausgeübter virtueller und realer Kraft bei stillstehendem Manipulator mit und/oder ohne unbekannte externe Kraft mit dem ersten bzw. zweiten Grenzwert zu vergleichen.

Stimmen der Wechsel der Umgebungsbedingungen, beispielsweise das Aufnehmen oder Ablegen einer vom Manipulator gegriffenen Last, und der Wechsel der zugehörigen Modelle zeitlich nicht exakt oder jedenfalls nicht innerhalb der Taktzeiten einer dritten Validierung während des Betriebs überein, kann dies dazu führen, dass die Validierung fehlschlägt. Insbesondere daher kann in einer bevorzugten Weiterbildung eine Akzeptanzzeit vorgesehen sein, während der eine Differenz zwischen ausgeübter virtueller und realer Kraft, die größer als der Maximalgrenzwert ist, akzeptiert, i.e. der Manipulator mit der auf Basis des Modells des Manipulators bestimmten Soll-Kraft beaufschlagt wird, obwohl der Vergleich ergibt, dass die Differenz nicht kleiner als der Maximalgrenzwert ist, wobei diese Akzeptanzzeit an die Taktzeit eines Modellwechsels bzw. eines Wechsels der hierdurch abgebildeten Umgebungsbedingungen angepasst sein kann.

Weitere Vorteile und Merkmale ergeben sich aus den Unteransprüchen und den Ausführungsbeispielen. Hierzu zeigt, teilweise schematisiert:

Fig. 1:     einen eingliedrigen Roboter; und

Fig. 2:     den Ablauf eines Verfahrens zur modellbasierten Regelung des Roboters nach Fig. 1 nach einer Ausführung der vorliegenden Erfindung.

Nachfolgend wird ein Verfahren zur modellbasierten Regelung eines Manipulators nach einer Ausführung der vorliegenden Erfindung anhand eines sehr einfachen Beispiels exemplarisch erläutert.

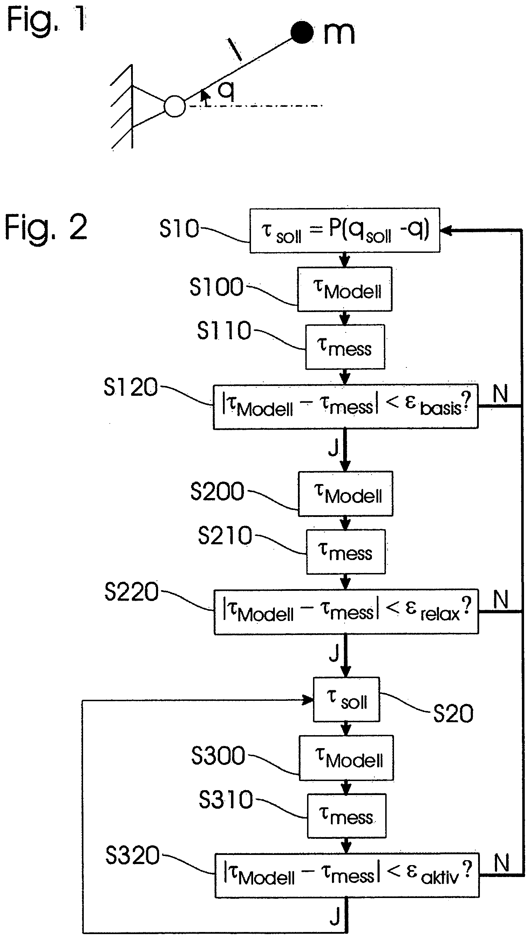

Fig. 1 zeigt in schematisierter Weise einen eingliedrigen Manipulator in Form eines Roboters, dessen Arm der Länge I drehbar an der inertial festen Basis gelagert ist, wobei die Masse m des Armes näherungsweise in dessen inertial abgewandtem Ende konzentriert ist. Die Drehung des Armes gegen die Horizontale in mathematisch positiver Richtung wird durch die Minimalkoordinate q beschrieben. Einer Drehbewegung wirkt das Gleitreibmoment $\mu\, dq/dt$ entgegen.

Damit lautet Gleichung (1) für diesen Roboter

$$\underbrace{(ml^2)}_{M}\frac{d^2q}{dt^2} + \underbrace{\mu\frac{dq}{dt} + mgl\sin(90° - q)}_{h\left(q,\frac{dq}{dt},t\right)} = \underbrace{\tau}_{J^T\tau} \qquad (1')$$

Ein rein statisches mechanisches Modell des Roboters gem. Gleichung (3) wird beschrieben durch

$$m_{Modell}\, gl_{Modell}\sin(90° - q_{Modell}) = \tau \qquad (3')$$

mit der Gravitationskonstanten g und dem von einem Aktuator in Form eines (nicht dargestellten) Elektromotors auf den Arm des Roboters ausgeübten Antriebsdrehmoment $\tau$.

Wird der Roboter auf Basis dieses Modells geregelt, indem ihm als Soll-Pose gerade seine Ist-Pose vorgegeben wird, so führt dies gem. Gleichung (6) auf

$$(ml^2)\frac{d^2q}{dt^2} + \mu\frac{dq}{dt} + mgl\sin(90° - q) = m_{Modell}\, gl_{Modell}\sin(90° - q) \qquad (6'),$$

Man erkennt, dass - sofern die Modellparameter $m_{Modell}$, $l_{Modell}$ korrekt sind, der Roboter in einer einmal eingenommenen Pose verharrt und zur Bewegung des Roboters nur seine Trägheits- und Reibungskräfte überwunden werden müssen.

Stimmen die Modellparameter jedoch nicht, da beispielsweise aufgrund einer unbekannten, gegriffenen Nutzlast die Masse m größer als die dem Modell zugrundegelegte Masse $m_{Modell}$ ist, so würde der Roboter unter einer auf diesem Modell basierenden Regelung nicht in der einmal eingenommenen Pose verharren, sondern sich unerwünscht in Bewegung setzen. Daher wird das Modell (3') nach einem Verfahren nach einer Ausführung der vorliegenden Erfindung validiert, bevor es der modellbasierten Regelung, hier einer Gravitationskompensation zugrundegelegt wird.

Hierzu wird, wie in Fig. 2 dargestellt, zunächst in Schritt S10 eine softwaremäßig implementierte Bremse geschlossen, indem dem Elektromotor ein Soll-Drehmoment aufgeschaltet wird, das den Roboter in der vorgegebenen Soll-Position hält, indem beispielsweise eine gerade eingenommene horizontale Ist-Position "eingefroren" und als Soll-Position einem Proportional- und/oder Integral-Positionsregler zugeführt wird. In diesem sicheren Betriebshalt verharrt der Roboter aufgrund seines steifen Positionsreglers, während ihn der Elektromotor hierzu beständig mit einem Soll-Drehmoment $\tau_{soll} = mgl$ beaufschlagt.

Nun wird in den Schritten S100 bis S120 eine erste Validierung durchgeführt. Hierzu wird in Schritt S100 das virtuelle Drehmoment berechnet, das der Roboter gem. Gleichung (3') auf den Elektromotor ausübt, i.e. $\tau_{Modell} = m_{Modell}gl_{Modell}$. In Schritt S110 wird das reale Drehmoment $\tau_{mess}$ erfasst, das der Roboter auf den Elektromotor ausübt. Da dieses reale Drehmoment gerade dem vom Elektromotor auf den Roboter ausgeübten Drehmoment das Gleichgewicht hält, kann dieses aus dem vom Elektromotor aufgenommenen Motorstrom bestimmt werden.

Nun wird in Schritt S120 die Differenz $\Delta$ zwischen beiden Drehmomenten als Absolutbetrag der beiden skalaren Werte $\tau_{Modell}$, $\tau_{mess}$ gebildet. Da der Roboter während dieser ersten Validierung steht, i.e. keine Reibung oder Trägheiten auftreten, sollten beide Werte relativ genau übereinstimmen, die Differenz $\Delta$ daher einen kleinen ersten Grenzwert $\varepsilon_{basis}$ als Maximalgrenzwert nicht überschreiten. Tut sie dies doch (S120: "N"), da beispielsweise die Masse aufgrund einer im Modell nicht berücksichtigten Nutzlast größer ist, so verbleibt der Roboter weiter in dem sicheren Betriebshalt und eine Fehlermeldung, die die fehlgeschlagene erste Validierung anzeigt, wird ausgegeben (nicht dargestellt).

Ist die erste Validierung, während der sichergestellt wird, dass keine unbekannte externe Kraft auf den Robotrer einwirkt, er beispielsweise nicht manuell berührt wird, erfolgreich (S120: "J"), so fährt das Verfahren mit der zweiten Validierung fort.

Da die modellbasierte Regelung auch bei unbekannten externen Störungen robust sein soll, wird nun die Einwirkung einer externen unbekannten, im Modell nicht berücksichtigten Kraft auf den Roboter zugelassen, er wird beispielsweise von einem Bediener manuell berührt. Drückt der Bediener beispielsweise mit der Kraft F senkrecht nach unten auf die Endmasse m, so ändert sich Gleichung (1') zu

$$(ml^2)\frac{d^2q}{dt^2} + \mu\frac{dq}{dt} + mgl\sin(90° - q) + lF = \tau \qquad (1'),$$

i.e. weicht auch bei stehendem Roboter vom mechanischen Modell (3') ab. Daher wird in den Schritten S200, S210 in analoger Weise zu den vorstehend erläuterten Schritten S100, S110 das ausgeübte virtuelle und reale Drehmoment $\tau_{Modell}$, $\tau_{mess}$ bestimmt und die Differenz $\Delta$ zwischen beiden Drehmomenten gebildet. Diese Differenz wird in Schritt S220 mit einem zweiten Grenzwert $\varepsilon_{relax}$ als Maximalgrenzwert verglichen, der aufgrund der zugelassenen externen Kraft F größer gewählt ist als der erste Grenzwert $\varepsilon_{basis}$. Bildet das Modell auch bei einer solchen Störung den Roboter hinreichend genau ab, i.e. ist die Differenz $|\tau_{Modell}$, $\tau_{mess}|$ betragsmäßig kleiner als der zweite Grenzwert $\varepsilon_{relax}$, so ist auch die zweite Validierung erfolgreich (S220: "J"), andernfalls wird wie bei fehlgeschlagener erster Validierung weiter der sichere Betriebshalt beibehalten und eine entsprechende Fehlermeldung ausgegeben (S220: "N").

Auf Basis dieses validierten Modells wird nun das Soll-Drehmoment $\tau_{soll}$ gemäß Gleichung (3') berechnet, das in jeder Pose die Gravitation kompensiert. Hierzu wird in Schritt S20 die softwaremäßig implementierte Bremse gelöst, indem von der steifen Positions- auf die modellbasierte Regelung umgeschaltet wird.

Während des Betriebs des Roboters, in dem beispielsweise ein Benutzer ihn durch Aufbringen der Kraft F bewegt, wirken auch Reibungs- und Trägheitskräfte auf den Roboter, die in dem statischen Modell (3') nicht berücksichtigt sind. Die Abweichung zwischen dem ausgeübten virtuellen Drehmoment $\tau_{Modell}$ des Roboters auf den Elektromotor, das auf Basis dieses Modells bestimmt wird, und dem realen Drehmoment $\tau_{mess}$, das Roboter und Elektromotor aufeinander ausüben, wird dementsprechend noch größer, darf jedoch nicht so groß werden, dass der Roboter unvorhergesehene Reaktionen zeigt. Daher wird periodisch während des Betriebs eine dritte Validierung durchgeführt, in der in den Schritten S300 bis S320 das virtuelle und reale Drehmoment $\tau_{Modell}$, $\tau_{mess}$ bestimmt und mit einem dritten Grenzwert $\varepsilon_{aktiv}$ als Maximalgrenzwert verglichen wird, der größer als der zweite Grenzwert $\varepsilon_{relax}$ ist. Solange diese Differenz kleiner als der dritte Grenzwert ist, wird der Roboter mit dem auf Basis des Modells bestimmten Soll-Drehmoment beaufschlagt (S320: "J"), andernfalls in einen sicheren Betriebshalt überführt und eine Fehlermeldung ausgegeben (S320: "N").

**Patentansprüche**

1.  Verfahren zur modellbasierten Regelung eines Manipulators, insbesondere eines Roboters, mit den Schritten:

    a) Bestimmen (S20) einer Soll-Kraft ($\tau_{Soll}$) eines Aktuators des Manipulators auf Basis eines Modells des Manipulators; und

    b) Beaufschlagen (S20) des Manipulators mit dieser Soll-Kraft durch den Aktuator, wobei das Modell, anhand dessen die Soll-Kraft bestimmt wird, wenigstens einmal validiert wird, bevor der Manipulator mit dieser Soll-Kraft beaufschlagt wird, wobei hierzu die Schritte ausgeführt werden:
    c) Bestimmen (S100, S200, S300) einer vom Manipulator ausgeübten virtuellen Kraft ($\tau_{Modell}$) auf Basis des Modells des Manipulators;
    d) Bestimmen (S110, S210, S310) einer vom Manipulator ausgeübten realen Kraft ($\tau_{mess}$);
    e) Bestimmen der Differenz ($\Delta$) zwischen ausgeübter virtueller und realer Kraft; und
    f) Vergleichen (S120, S220, S320) dieser Differenz mit einem Maximalgrenzwert ($\varepsilon$);

    wobei der Manipulator mit der auf Basis des Modells des Manipulators bestimmten Soll-Kraft nur beaufschlagt wird, falls der Vergleich ergibt, dass die Differenz kleiner als der Maximalgrenzwert ist.

2.  Verfahren nach Anspruch 1, **dadurch gekennzeichnet, dass** das Modell ein mechanisches Modell, insbesondere ein dynamisches oder statisches Modell des Manipulators ist.

3.  Verfahren nach einem der vorhergehenden Ansprüche, **dadurch gekennzeichnet, dass** die ausgeübte Kraft eine Kraft ist, die der Manipulator auf eine Sensoranordnung ausübt.

4.  Verfahren nach Anspruch 3, **dadurch gekennzeichnet, dass** die Sensoranordnung eine Kraft erfasst, die vom Manipulator auf einen Aktuator und/oder eine Bremse des Manipulators ausgeübt wird.

5.  Verfahren nach einem der vorhergehenden Ansprüche, **dadurch gekennzeichnet, dass** die Differenz ($\Delta$) eine Norm über die Differenz zwischen ausgeübter virtueller und realer Kraft ist, insbesondere eine Maximums- oder Betragsnorm.

6.  Verfahren nach einem der vorhergehenden Ansprüche, **dadurch gekennzeichnet, dass** die Differenz ($\Delta$) zwischen ausgeübter virtueller und realer Kraft bestimmt und mit einem Maximalgrenzwert verglichen wird (S120), während der Manipulator sich nicht bewegt und keine, insbesondere im Modell nicht berücksichtigten, externen Kräfte auf ihn wirken, wobei der Maximalgrenzwert ein erster Grenzwert ($\varepsilon_{basis}$) ist.

7. Verfahren nach Anspruch 6, **dadurch gekennzeichnet, dass** die Differenz zwischen ausgeübter virtueller und realer Kraft für einen vorbestimmten Zeitraum bestimmt und mit dem Maximalgrenzwert verglichen wird (S120), während der Manipulator sich nicht bewegt und keine externen Kräfte auf ihn wirken.

8. Verfahren nach einem der vorhergehenden Ansprüche, **dadurch gekennzeichnet, dass** die Differenz zwischen ausgeübter virtueller und realer Kraft bestimmt und mit einem Maximalgrenzwert verglichen wird (S220), während der Manipulator sich nicht bewegt, wobei der Maximalgrenzwert ein zweiter Grenzwert ($\varepsilon_{relax}$) ist.

9. Verfahren nach einem der vorhergehenden Ansprüche 6 bis 8, **dadurch gekennzeichnet, dass** die Differenz zwischen ausgeübter virtueller und realer Kraft bestimmt und mit einem Maximalgrenzwert verglichen wird, während eine mechanische und/oder softwaremäßig implementierte Bremse des Manipulators geschlossen ist.

10. Verfahren nach einem der vorhergehenden Ansprüche, **dadurch gekennzeichnet, dass** die Differenz zwischen ausgeübter virtueller und realer Kraft bestimmt und mit einem Maximalgrenzwert verglichen wird (S220), während der Manipulator sich bewegt, wobei der Maximalgrenzwert ein dritter Grenzwert ($\varepsilon_{aktiv}$) ist.

11. Verfahren nach einem der vorhergehenden Ansprüche, **dadurch gekennzeichnet, dass** der Vergleich in Schritte e) ergibt, dass die Differenz kleiner als der Maximalgrenzwert ist, wenn die Differenz höchstens für einen vorgegebenen Akzeptanzzeitraum größer als der Maximalgrenzwert ist.

12. Verfahren nach einem der vorhergehenden Ansprüche, **dadurch gekennzeichnet, dass** der Manipulator mit der auf Basis des Modells des Manipulators bestimmten Soll-Kraft beaufschlagt wird, obwohl der Vergleich ergibt, dass die Differenz nicht kleiner als der Maximalgrenzwert ist, wenn eine entsprechende Eingabe, insbesondere durch eine von einem Bediener gedrückte Taste, vorliegt.

13. Verfahren nach einem der vorhergehenden Ansprüche, **dadurch gekennzeichnet, dass** die Soll-Kraft und/oder die vom Manipulator ausgeübte virtuelle Kraft auf Basis eines ersten oder eines zweiten, hiervon verschiedenen Modells des Manipulators bestimmt werden.

14. Steuervorrichtung für einen Manipulator, insbesondere einen Roboter, die zur Durchführung eines Verfahrens nach einem der vorhergehenden Ansprüche eingerichtet ist.

15. Computerprogramm, das ein Verfahren nach einem der Ansprüche 1 bis 13 ausführt, wenn es in einer Steuervorrichtung nach Anspruch 14 abläuft.

16. Computerprogrammprodukt mit Programmcode, der auf einem maschinenlesbaren Träger gespeichert ist und ein Computerprogramm nach Anspruch 15 umfasst.

**Claims**

1. A method of model-based controlling a manipulator, in particular a robot, comprising the steps of:

   a) determining (S20) a target force ($\tau_{Soll}$) of an actuator of the manipulator on the basis of a model of the manipulator; and
   b) applying (S20) this target force to the manipulator by means of the actuator, wherein the model on the basis of which the target force is determined is validated at least once before this target force is applied to the manipulator, wherein the following steps are carried out for this purpose:
   c) determining (S100, S200, S300) a virtual force ($\tau_{Modell}$) exerted by the manipulator on the basis of the model of the manipulator;
   d) determining (S110, S210, S310) a real force ($\tau_{mess}$) exerted by the manipulator;
   e) determining the difference ($\Delta$) between the exerted virtual force and the exerted real force; and
   f) comparing (S120, S220, S320) this difference with a maximum limit value ($\varepsilon$);

   wherein the target force determined on the basis of the model of the manipulator is applied to the manipulator only if the comparison shows that the difference is smaller than the maximum limit value.

2. The method according to claim 1, **characterised in that** the model is a mechanical model, in particular a dynamic model or a static model of the manipulator.

3. The method according to any one of the preceding claims, **characterised in that** the force exerted is a force exerted by the manipulator on a sensor arrangement.

4. The method according to claim 3, **characterised in that** the sensor arrangement detects a force which is exerted by the manipulator on an actuator and / or on a brake of the manipulator.

5. The method according to any one of the preceding claims, **characterised in that** the difference ($\Delta$) is a norm of the difference between the exerted virtual force and the exerted real force, in particular a maximum norm or an absolute-value norm.

6. The method according to any one of the preceding claims, **characterised in that** the difference ($\Delta$) between the exerted virtual force and the exerted real force is determined and compared (S120) with a maximum limit value while the manipulator is not moving and while no external forces act on it, in particular none which are not taken into account in the model, wherein the maximum limit value is a first limit value ($\varepsilon_{basis}$).

7. The method according to claim 6, **characterised in that** the difference between the exerted virtual force and the exerted real force is determined for a predetermined period of time and compared (S120) with the maximum limit value while the manipulator is not moving and no external forces are acting on it.

8. The method according to any one of the preceding claims, **characterised in that** the difference between the exerted virtual force and the exerted real force is determined and compared (S220) with a maximum limit value while the manipulator is not moving, wherein the maximum limit value is a second limit value ($\varepsilon_{relax}$).

9. The method according to any one of the preceding claims 6 to 8, **characterised in that** the difference between the exerted virtual force and the exerted real force is determined and compared with a maximum limit value while a mechanical and / or a software implemented brake of the manipulator is closed.

10. The method according to any one of the preceding claims, **characterised in that** the difference between the exerted virtual force and the exerted real force is determined and compared with a maximum limit value (S220) while the manipulator is moving, wherein the maximum limit value is a third limit value ($\varepsilon_{aktiv}$).

11. The method according to any one of the preceding claims, **characterised in that** the comparison in step e) shows that the difference is smaller than the maximum limit value if the difference is larger than the maximum limit value at most for a predetermined acceptance period.

12. The method according to any one of the preceding claims, **characterised in that** the manipulator is subjected to the target force determined on the basis of the model of the manipulator, even though the comparison shows that the difference is not less than the maximum limit value, in the case of a corresponding input being present, in particular via a key pressed by an operator.

13. The method according to any one of the preceding claims, **characterised in that** the target force and / or the virtual force exerted by the manipulator is / are determined on the basis of a first model of the manipulator or on the basis of a second model, different therefrom, of the manipulator.

14. A control device for a manipulator, in particular a robot, which is arranged to carry out a method according to any one of the preceding claims.

15. A computer program which executes a method according to any one of the claims 1 to 13 when it is run on a control device according to claim 14.

16. A computer program product which comprises program code which is stored on a machine-readable medium and which comprises a computer program according to claim 15.

**Revendications**

1. Procédé de réglage, basé sur un modèle, d'un manipulateur, en particulier d'un robot, avec les étapes :

   a) la détermination (S20) d'une force de consigne ($\tau_{Soll}$) d'un actuateur du manipulateur sur la base d'un modèle du manipulateur ; et
   b) la soumission (S20) du manipulateur à l'effet de cette force de consigne par le biais de l'actuateur, dans lequel le modèle, à l'aide duquel la force de consigne est déterminée, est validé au moins une fois avant que le manipulateur soit soumis à l'effet de cette force de consigne, dans lequel, à cet effet, les étapes sont exécutées :
   c) la détermination (S100, S200, S300) d'une force virtuelle ($\tau_{Modell}$) exercée par le manipulateur sur la base du modèle du manipulateur ;
   d) la détermination (S110, S210, S310) d'une force réelle ($\tau_{mess}$) exercée par le manipulateur ;
   e) la détermination de la différence ($\Delta$) entre les forces exercées réelle et virtuelle ; et
   f) la comparaison (S120, S220, S320) de cette différence à une valeur limite maximale ($\varepsilon$) ;

   dans lequel le manipulateur est soumis à l'effet de la force de consigne déterminée sur la base du modèle du manipulateur uniquement s'il résulte de la comparaison que la différence est plus petite que la valeur limite maximale.

2. Procédé selon la revendication 1, **caractérisé en ce que** le modèle est un modèle mécanique, en particulier un modèle dynamique ou statique du manipulateur.

3. Procédé selon l'une quelconque des revendications précédentes, **caractérisé en ce que** la force exercée est une force que le manipulateur exerce sur un agencement de capteurs.

4. Procédé selon la revendication 3, **caractérisé en ce que** l'agencement de capteurs détecte une force qui est exercée par le manipulateur sur un actuateur et/ou un frein du manipulateur.

5. Procédé selon l'une quelconque des revendications précédentes, **caractérisé en ce que** la différence ($\Delta$) une norme sur la différence entre les forces exercées virtuelle et réelle, en particulier une valeur absolue maximale ou une valeur absolue.

6. Procédé selon l'une quelconque des revendications précédentes, **caractérisé en ce que** la différence ($\Delta$) entre les forces exercées virtuelle et réelle est déterminée et comparée à une valeur limite maximale (S120) pendant que le manipulateur ne se déplace pas et qu'aucune force externe, en particulier prise en compte dans le modèle, n'agit sur lui, dans lequel la valeur limite maximale est une première valeur limite ($\varepsilon_{basis}$).

7. Procédé selon la revendication 6, **caractérisé en ce que** la différence entre les forces exercées virtuelle et réelle est déterminée pour une période de temps prédéterminée et est comparée à la valeur limite maximale (S120) pendant que le manipulateur ne se déplace pas et qu'aucune force externe n'agit sur lui.

8. Procédé selon l'une quelconque des revendications précédentes, **caractérisé en ce que** la différence entre les forces exercées virtuelle et réelle est déterminée et comparée à une valeur limite maximale (S220) pendant que le manipulateur ne se déplace pas, dans lequel la valeur limite maximale est une deuxième valeur limite ($\varepsilon_{relax}$).

9. Procédé selon l'une quelconque des revendications précédentes 6 à 8, **caractérisé en ce que** la différence entre les forces exercées virtuelle et réelle est déterminée et comparée à une valeur limite maximale pendant qu'un frein du manipulateur, mécanique ou mis en oeuvre de manière logicielle, est fermé.

10. Procédé selon l'une quelconque des revendications précédentes, **caractérisé en ce que** la différence entre les forces exercées virtuelle et réelle est déterminée et comparée à une valeur limite maximale (S220) pendant que le manipulateur se déplace, dans lequel la valeur limite maximale est une troisième valeur limite ($\varepsilon_{aktiv}$).

11. Procédé selon l'une quelconque des revendications précédentes, **caractérisé en ce qu'**il résulte de la comparaison au cours de l'étape e) que la différence est plus petite que la valeur limite maximale si la différence au plus pour une période d'acceptation prédéfinie est plus grande que la valeur limite maximale.

12. Procédé selon l'une quelconque des revendications précédentes, **caractérisé en ce que** le manipulateur est soumis à l'effet de la force de consigne déterminée sur la base du modèle du manipulateur bien qu'il résulte de la comparaison que la différence n'est pas plus petite que la valeur limite maximale si une entrée correspondante, en particulier par le biais d'une touche actionnée par un opérateur, est présente.

13. Procédé selon l'une quelconque des revendications précédentes, **caractérisé en ce que** la force de consigne et/ou la force virtuelle exercée par le manipulateur sont déterminées sur la base d'un premier modèle du manipulateur ou d'un second modèle du manipulateur différent du premier.

14. Dispositif de commande pour un manipulateur, en particulier un robot, qui est conçu pour l'exécution d'un procédé selon l'une quelconque des revendications précédentes.

15. Programme d'ordinateur qui effectue un procédé selon l'une quelconque des revendications 1 à 13 lorsqu'il se déroule dans un dispositif de commande selon la revendication 14.

16. Produit-programme d'ordinateur, qui est stocké sur un support enregistré sur un support lisible par machine et comporte un programme d'ordinateur selon la revendication 15.

## Fig. 1

## Fig. 2

S10 $\quad \tau_{soll} = P(q_{soll} - q)$

S100 $\quad \tau_{Modell}$

S110 $\quad \tau_{mess}$

S120 $\quad |\tau_{Modell} - \tau_{mess}| < \varepsilon_{basis}?$ $\quad$ N

J

S200 $\quad \tau_{Modell}$

S210 $\quad \tau_{mess}$

S220 $\quad |\tau_{Modell} - \tau_{mess}| < \varepsilon_{relax}?$ $\quad$ N

J

$\tau_{soll}$ $\quad$ S20

S300 $\quad \tau_{Modell}$

S310 $\quad \tau_{mess}$

S320 $\quad |\tau_{Modell} - \tau_{mess}| < \varepsilon_{aktiv}?$ $\quad$ N

J

**EP 2 072 194 B1**

**IN DER BESCHREIBUNG AUFGEFÜHRTE DOKUMENTE**

**In der Beschreibung aufgeführte Patentdokumente**

- EP 0404962 A1